(19) Europäisches Patentamt
European Patent Office
Office européen des brevets

(11) **EP 3 498 885 B1**

(12) **EUROPEAN PATENT SPECIFICATION**

(45) Date of publication and mention of the grant of the patent:
**04.10.2023 Bulletin 2023/40**

(21) Application number: **18212711.8**

(22) Date of filing: **14.12.2018**

(51) International Patent Classification (IPC):
*C23F 13/10* (2006.01)    *B63B 59/00* (2006.01)
*C23F 13/18* (2006.01)    *C23F 13/22* (2006.01)
*H02G 9/10* (2006.01)

(52) Cooperative Patent Classification (CPC):
**C23F 13/18; C23F 13/10; C23F 13/22; H02G 9/10;**
C23F 2213/30

(54) **ARRANGEMENT COMPRISING AN ELECTRONIC DEVICE ASSEMBLY IN A MANHOLE**

ANORDNUNG BEINHALTEND EINE ELEKTRONISCHE GERÄTEBAUGRUPPE IN EINEM SCHACHT

ENSEMBLE COMPRENANT UN DISPOSITIF D'APPAREILLAGE ELECTRONIQUE DANS UN REGARD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2017 CN 201721766987 U**

(43) Date of publication of application:
**19.06.2019 Bulletin 2019/25**

(73) Proprietor: **Huawei Technologies Co., Ltd.**
**Shenzhen, Guangdong 518129 (CN)**

(72) Inventors:
- **Pan, Lulu**
  **Shenzhen, Guangdong 518129 (CN)**
- **Chen, Hua**
  **Shenzhen, Guangdong 518129 (CN)**
- **Wang, Hua**
  **Shenzhen, Guangdong 518129 (CN)**
- **Hu, Banghong**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
**GB-A- 1 441 540**    **JP-A- S5 831 087**
**JP-U- S5 670 976**    **US-A- 2 609 340**
**US-A- 2 775 554**    **US-A- 3 134 731**
**US-A- 4 017 714**    **US-A- 5 340 455**
**US-A1- 2014 216 945**

## Description

### TECHNICAL FIELD

The application relates to the field of electronic technologies, and in particular, to an electronic device assembly used in a manhole.

### BACKGROUND

For convenience of maintenance and wiring in the electric power or communication field, a vertical passage that a person can enter can be dug at intervals, and is referred to as a manhole. Common manholes include a cable manhole, a communications manhole, and the like. The manhole includes an electronic device, such as an outdoor communications device, and a ground bar built into a wall of the manhole. A housing of the device is connected to a grounding device by using a ground cable, so that energy of a lightning strike and a fault current can safely pass. Due to lack of drainage conditions, usually water accumulates in the manhole. A communication product and the ground bar are dissimilar metals. When a potential difference of the two is greater than 50 millivolts (minimum potential difference triggering galvanic corrosion), galvanic corrosion occurs between the communications device and the ground bar once both the communications device and the ground bar are immersed in the accumulated water (electrolyte solution) in the manhole. In this type of corrosion, a low-potential metal (communications device) becomes an anode. The anode loses electrons and is corroded under driving of a potential difference between the anode and a cathode. Further, there is not only galvanic corrosion but also electrolytic corrosion on a communications device that is cable-supplied with an alternating current.

In the prior art, a de-coupler is integrated on the ground cable between the ground bar and the communications device. A character of "blocking a micro current (microampere level) and passing a large current (milliampere level)" of the de-coupler is used to cut off a micro current (microampere level) between the ground bar and the communication product, so as to block galvanic corrosion. However, for a direct current supply scenario, the de-coupler can isolate only galvanic corrosion between the communications device and the ground bar, but cannot block galvanic corrosion between dissimilar-metal parts of the communications device. In an alternating current cable-supply scenario, even if electrical drainage has been performed on the communications device, the device still has an amount of current (milliampere level), and the communications device is still faced with a dual corrosion problem of galvanic corrosion and electrolytic corrosion.

Document JP S58-031087 A refers to an electrolytical corrosion-proof transformer tank with simple installation by burying said tank in an underground hole made of reinforced concrete and disposing a sacrificial anode via an insulated wire in said hole. In a galvanic anode method, a transformer tank is buried in an underground hole made of reinforced concrete and is connected to a grounding bar, reinforcing bars and a sheathed earth via insulated cables. A sacrificial anode is installed via the cable in the hole. When the tank is submerged in the water in the hole and corrosion is to initiate, the sacrificial electrode submerges in the water as well and provides an electrolytic protection effect.

Document JP S56-70976 U discloses a ground rod that is protected against corrosion by means of a sacrificial electrode that is placed in a separate hole adjacent to the ground rod.

Document GB 1 441 540 A refers to an anode, having a magnesium body that has its iron rod core pulled or pushed partly out of the body so that a perforated tube of the same diameter as the rod may be introduced into the core passage following an amount of a metal cement until it abuts and is fixed to the rod, the end of the rod pushed out is then cut-off. A perforated metal tube is welded or soldered to the rod and is hermetically sealed from the space surrounding the anode by the anodic material surrounding and cladding the tube, and an unperforated portion extends for connection to a pressure or vacuum circuit, operating an electric switch, signal lamps and a horn, which electric devices indicate either a satisfactory condition of the anode or give warning of its near complete corrosion when the hermetic seal breaks down and permits pressure to pass through to the switch.

Document US 2 609 340 A refers to a corrosion inhibiting device for containers of water having corrosive tendencies; said device comprising a base plug having means externally of one end thereof operable to effect self-supporting attachment of said plug in an opening in a wall of the container. A plurality of replaceable anode elements is carried by a rod, each of said anode elements comprising a metal sleeve component through which said rod extends.

Document US 2014/0216945 A1 relates to methodologies and algorithms for providing anode rod depletion detection and warnings thereof to consumers. Consumers general are not concerned with monitoring consumption of protective anode rods incorporated within water heaters, Therefore, an automatic monitoring of anode rod depletion is provided and provides the consumer with notification of rod depletion beyond a predetermined amount by one or more of optical, audible, or electronic devices. Aspects of the algorithm include handling of start-up conditions, service board replacement conditions, and properly defining the anode rod depletion threshold. Additional algorithm aspects include considerations for taking into consideration power outage conditions and accurately estimating galvanic current.

**EP 3 498 885 B1**

## SUMMARY

A technical problem to be resolved by the application is to provide an arrangement comprising a manhole and an electronic device assembly, so as to resolve a problem of electrochemical corrosion between a communications device and a ground bar in the prior art.

The present invention is defined by the attached set of claims.

To resolve the foregoing technical problem, the application provides an electronic device assembly, fastened in a manhole. The electronic device assembly includes an electronic device, a grounding device, and an anode member. A base material of a housing of the electronic device is a first metal. The grounding device is electrically connected to the housing. The anode member is electrically connected to the housing. A base material of the anode member is a second metal. A metal potential of the second metal is less than a metal potential of the first metal. In the manhole, galvanic corrosion or galvanic corrosion and electrolytic corrosion occur on the anode member to protect the electronic device, so as to prolong a lifetime of the electronic device.

In an implementation, the grounding device and the anode member are electrically connected to a ground point of the electronic device by using a split cable. A connection manner using the split cable is simple and easy to implement, so that the electronic device and the anode member can be electrically connected, and grounding of the electronic device is not affected.

The electronic device assembly further includes a rod member, the anode member is sleeved and fastened on the rod member, and the anode member is fastened in the manhole by using the rod member. The anode member is consumed in a process of protecting the electronic device, but the rod member is not consumed. A fastening structure of the anode member is stabilized by using the rod member to fasten the anode member, so as to avoid disconnection of the anode member.

There are at least two anode members and at least two rod members, each of the anode members is sleeved on one of the rod members, each of rod members includes end parts protruding from the anode member, and the at least two rod members are mutually fastened by using the end parts. A plurality of anode members increase mass of the anode members to prolong a service cycle of the anode members, and a manner of mutually fastening the rod members by using the end parts is simple and easy to implement and maintain.

In an implementation, the at least two rod members are placed in parallel, and extension directions of the rod members are consistent. A fastening manner between the rod members is simple and easy to maintain.

In an implementation, the electronic device assembly further includes a fastener, and two oppositely disposed end parts of each of the rod members are fixedly connected to the fastener. A manner of firmly fastening the rod member by using the fastener, so that the rod member and the anode member are not easy to disconnect.

In an implementation, the at least two rod members are distributed radially by using a same fastening point as a center, one end part of each of the rod members is fastened at a location of the fastening point, and the other end part of each of the rod members is a free end. A fastening manner between the rod members is simple and easy to maintain.

In an implementation, a material of the rod member is cast iron. The anode member is consumed in a process of protecting the electronic device, but the rod member is not consumed. A fastening structure of the anode member is stabilized by using the rod member to fasten the anode member, so as to avoid disconnection of the anode member.

In an implementation, a base material of the grounding device is a third metal, and the metal potential of the first metal is less than a metal potential of the third metal, so that the anode member is used as a sacrificial anode to protect the electronic device, and the grounding device is also prevented from being corroded.

In an implementation, the first metal is an aluminum alloy, and a protection potential of the second metal is lower than -1.05 V, so as to avoid cathodic disbondment on a coating of the housing of the electronic device.

In an implementation, the second metal is zinc, and mass of the second metal is not less than 1.97 kg, so that in a remote direct current supply scenario, the anode member protects the electronic device, so as to avoid galvanic corrosion on the housing of the electronic device.

In an implementation, the second metal is an aluminum alloy, and mass of the second metal is not less than 1.3 kg, so that in an alternating current cable-supply scenario, the anode member protects the electronic device, so as to avoid galvanic corrosion and electrolytic corrosion on the housing of the electronic device.

In an implementation, an alarm apparatus is further provided. When mass of the anode member is less than a preset value, the alarm apparatus is configured to send an alarm signal, so as to remind maintenance personnel to replace the anode member in time.

A beneficial effect of the arrangement is as follows: The electronic device is electrically connected to the grounding device for grounding. When the electronic device assembly is applied to a manhole with accumulated water or another moist environment, the accumulated water is equivalent to an electrolyte solution. The anode member and the housing of the electronic device are dissimilar metals. The metal potential of the second metal is less than the metal potential of the first metal. Therefore, in a remote direct current supply scenario, the anode member becomes an anode, loses electrons, and is corroded, and the housing of the electronic device becomes a cathode, obtains electrons and is

3

protected. Galvanic corrosion occurs on the anode member to protect the electronic device from galvanic corrosion. In an alternating current cable-supply scenario, the anode member protects the electronic device from galvanic corrosion; in addition, some currents flow out from the housing of the electronic device, the currents form a current loop among the accumulated water, the electronic device, and the anode member, and electrolytic corrosion occurs on the anode member to protect the electronic device from electrolytic corrosion and prolong a lifetime of the electronic device.

## BRIEF DESCRIPTION OF DRAWINGS

To describe the technical solutions the following briefly describes the accompanying drawings.

FIG. 1 is a schematic structural diagram of an electronic device assembly according to an embodiment;
FIG. 2 is a schematic diagram in which an electronic device assembly according to an embodiment is used in a manhole;
FIG. 3 is a schematic diagram useful for understanding the technical solution and not covered by the claims in which an electronic device and a grounding device are immersed in accumulated water;
FIG. 4 is a schematic diagram of an installation manner of an implementation of an anode member according to an embodiment
FIG. 5 is a schematic diagram of an installation manner of another implementation of an anode member according to an embodiment;
FIG. 6 is a schematic diagram of an installation manner of another implementation of an anode member not covered by the claims;
FIG. 7 is a schematic diagram of changes of a mean value of a closed-circuit potential of an electronic device when a second metal is zinc;
FIG. 8 is a schematic diagram of potential changes of an electronic device when a second metal is an aluminum alloy; and
FIG. 9 is a schematic diagram of output current changes of an anode member when a second metal is an aluminum alloy.

## DESCRIPTION OF EMBODIMENTS

The following clearly and completely describes the technical solutions in the embodiments with reference to the accompanying.

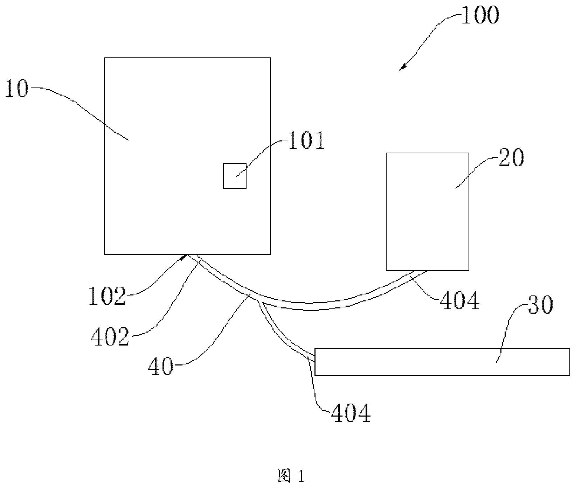

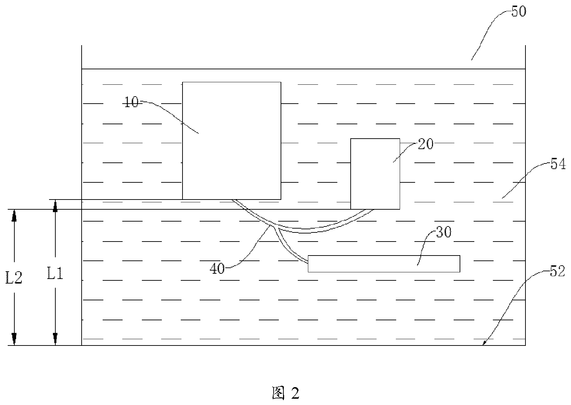

Referring to both FIG. 1 and FIG. 2, an embodiment provides an electronic device assembly 100. The electronic device assembly 100 is applied to a moist or water accumulation environment. In an implementation, the electronic device assembly 100 is fastened in a manhole 50, for example, a communications manhole and a cable manhole. Because there is no drainage condition in the manhole 50, accumulated water 54 exists in the manhole 50 after a rainy day and the like, and the electronic device assembly 100 is at least partially immersed in the accumulated water 54. In this embodiment, the electronic device assembly 100 is configured to implement functions such as communication.

Specifically, for FIG. 1, in this embodiment, the electronic device assembly 100 includes an electronic device 10, a grounding device 30, and an anode member 20. Specifically, the electronic device 10 is an electronic communications device, such as an access device. Specifically, the access device may be a router, a multiplexer, a modem, or the like. The electronic device 10 is placed in the manhole 50, so as to facilitate maintenance, wiring, and the like. In an implementation, the electronic device 10 has a housing, and the housing is configured to protect a component inside the electronic device 10, so as to prevent the component inside the electronic device 10 from directly contacting the outside and avoid damage to the component. In this embodiment, a base material of the electronic device 10 is a first metal. Specifically, a base material of the housing of the electronic device 10 is the first metal, and the first metal may be an aluminum alloy or the like.

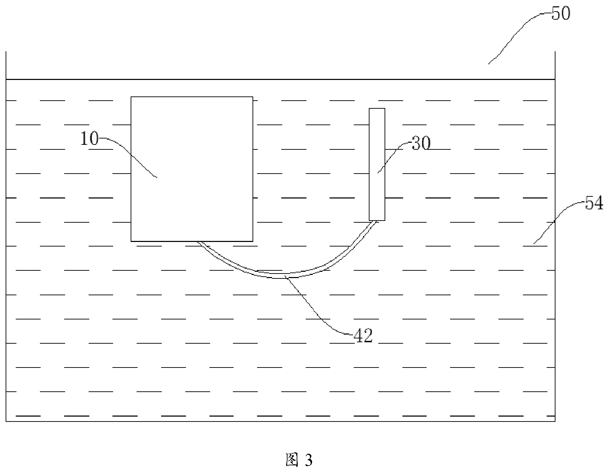

In this embodiment, the grounding device 30 is a metal apparatus, such as a ground bar, that is built into a wall of the manhole 50. The grounding device 30 is electrically connected to a ground point 102 of the electronic device 10, so as to ground the electronic device 10, so that energy of a lightning strike and a fault current can safely pass. In an implementation, the ground point 102 may be located at the bottom of the electronic device 10. In another implementation, the ground point 102 may alternatively be located at the top or another location of the electronic device 10. In this embodiment, the grounding device 30 is electrically connected to the housing of the electronic device 10, a base material of the grounding device 30 is a third metal, and the third metal is a metal with excellent conductivity, so as to improve a grounding effect of the electronic device 10. In an implementation, the third metal is copper or the like. In this embodiment, a metal potential of the first metal is less than a metal potential of the third metal; in other words, metal reactivity of the first metal is higher than that of the third metal. Referring to FIG. 3, showing an example useful for understanding the technical solution and not covered by the claims when both the electronic device 10 and the grounding device 30 that are connected by using a cable 42 are immersed in the accumulated water 54, the accumulated water 54 is equivalent to an electrolyte solution. In a remote direct current supply scenario, a high-potential metal becomes a cathode, and a low-potential metal becomes an anode. The anode loses electrons and is corroded. In other words, because the metal potential of the first metal is less than the metal potential of the third metal, galvanic corrosion occurs on the electronic device 10. Specifically, the housing of the electronic device 10 is corroded, and the electronic device 10 is damaged. In an alternating current cable-supply scenario, some currents of the electronic device 10 flow out from the housing and do not return from a neutral wire, and form a current loop with the accumulated water 54. The electronic device 10 further undergoes electrolytic corrosion, and the housing of the electronic device 10 is further corroded.

Referring to FIG. 1, in this embodiment, the anode member 20 is electrically connected to the electronic device 10. Specifically, the anode member 20 is electrically connected to the ground point 102 of the electronic device 10. In an implementation, both the grounding device 30 and the anode member 20 are electrically connected to the ground point 102 of the electronic device 10 by using a split cable 40 or a conversion bracket. When the split cable 40 is used, the split cable 40 includes one first end 402 and two second ends 404. The first end 402 is connected to the ground point 102 of the electronic device 10, and the two second ends 404 are respectively connected to the grounding device 30 and the anode member 20. Specifically, the ground point 102 of the electronic device 10 is provided with an O type terminal, and the first end 402 of the split cable 40 is fixedly connected to the O type terminal by using a screw. In this embodiment, a base material of the anode member 20 is a second metal. A metal potential of the second metal is less than the metal potential of the first metal. In other words, metal reactivity of the second metal is higher than that of the first metal. It may be understood that the metal reactivity of the second metal is also higher than that of the third metal. Referring to FIG. 2, when the electronic device 10 and the anode member 20 are immersed in the accumulated water 54, the accumulated water 54 is equivalent to an electrolyte solution. In the remote direct current supply scenario, a high-potential metal becomes a cathode, a low-potential metal becomes an anode, and the anode loses electrons and is corroded. In other words, because the metal potential of the second metal is less than the metal potential of the first metal, the anode member 20 becomes an anode and is corroded, and the electronic device 10 becomes a cathode and is protected. Galvanic corrosion occurs on the anode member 20, and the anode member 20 becomes a sacrificial anode to protect the electronic device 10. Specifically, the anode member 20 is a replaceable apparatus. When the anode member 20 is consumed too much and cannot continue to protect the electronic device 10, the anode member 20 in the manhole 50 may be replaced to continue to protect the electronic device 10. Specifically, the housing of the electronic device 10 is protected. An electronic component inside the electronic device 10 may also obtain long-term protection from the housing, thereby prolonging a lifetime of the electronic device 10. In the alternating current cable-supply scenario, some currents flowing out from the housing do not return through the neutral wire, and form a current loop with the accumulated water 54. Electrolytic corrosion further occurs on the anode member 20, so as to avoid damage caused by electrolytic corrosion on the housing of the electronic device 10. In this embodiment, the anode member 20 protects the electronic device 10 by consuming itself, so as to prolong the lifetime of the electronic device 10. It may be understood that the metal potential of the second metal is lower than the metal potentials of the first metal and the third metal. Electrochemical corrosion occurs on the anode member 20, and both the electronic device 10 and the grounding device 30 are protected. The electronic device 10 is normally used, and the grounding device 30 keeps the electronic device 10 grounded, so that the electronic device 10 works safely. In this embodiment, the anode member 20 and the electronic device 10 are 30 cm to 50 cm apart, so as to avoid occurrence of an anode shielding effect.

In an implementation, the electronic device 10 further has an alarm apparatus 101. When mass of the anode member 20 is less than a preset value, that is, when the anode member 20 is nearly used up or has been used up, a service cycle of the anode member 20 nearly ends or has ended, and the like, the alarm apparatus 101 notifies maintenance personnel by sending an alarm signal and the like, so that the maintenance personnel can replace the anode member 20 in time.

The electronic device 10 is electrically connected to the grounding device 30 for grounding. When the electronic device assembly 100 is applied to the manhole 50 with the accumulated water 54 or another moist environment, the anode member 20 is used as a sacrificial anode to protect the electronic device 10 because the metal potential of the second metal is less than the metal potential of the first metal. In the remote direct current supply scenario, the anode member 20 eliminates galvanic corrosion between the electronic device 10 and the grounding device 30. In the alternating current cable-supply scenario, the anode member 20 eliminates galvanic corrosion and electrolytic corrosion between the electronic device 10 and the grounding device 30, thereby prolonging the lifetime of the electronic device 10.

Referring to FIG. 2, in this embodiment, the electronic device assembly 100 is located in the manhole 50, that is, the electronic device 10, the grounding device 30, and the anode member 20 are located in the manhole 50. A distance L2 between the anode member 20 and the bottom 52 of the manhole 50 is less than a distance L1 between the electronic device 10 and the bottom 52. Specifically, the manhole 50 is a vertical passage that sinks into the ground. When the accumulated water 54 occurs in the manhole 50 due to rain and the like, the accumulated water 54 is accumulated starting from the bottom 52 to an entrance. The distance between the anode member 20 and the bottom 52 of the manhole 50 is less than the distance between the electronic device 10 and the bottom 52. During accumulation of the accumulated water 54, the anode member 20 first contacts a liquid surface of the accumulated water 54. In other words, when the electronic device 10 is immersed in the accumulated water 54, the anode member 20 definitely has been immersed in the accumulated water 54. Then, once the electronic device 10 is immersed in the accumulated water 54, the anode member 20 can protect the electronic device 10, thereby avoiding a case in which the electronic device 10 is not protected because the anode member 20 is not immersed in the accumulated water 54.

The anode member 20 is corroded and consumed in a use process. In this embodiment, there are a plurality of anode members 20, so as to provide enough mass of anode members 20 to protect the electronic device 10, increase a service cycle of the anode members 20, reduce replacing frequency of the anode members 20, and reduce maintenance costs.

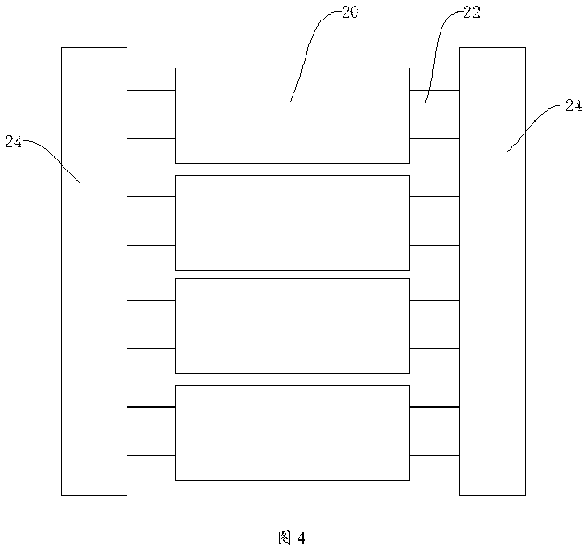

Referring to FIG. 4, FIG. 4 is a schematic diagram of an installation manner of the anode member 20. In this embodiment, the electronic device assembly 100 further includes a rod member 22, the anode member 20 is sleeved on the rod member 22, and the anode member 20 and the rod member 22 are mutually fastened. Specifically, the anode member 20 is a hollow cylindrical structure. In this embodiment, a material of the rod member 22 is cast iron, so that the rod member 22 cannot be consumed in a process of consuming the anode member 20, so as to ensure that the rod member 22 is stably fastened in the manhole 50. In an implementation, the rod member 22 is built into the anode member 20 through pouring, and forms a whole with the anode member 20. In an implementation, the rod member 22 is a bar structure, the rod member 22 passes through the anode member 20, and an axial length of the rod member 22 is greater than an axial length of the anode member 20, and end parts of the rod member 22 protrude from the anode member 20, so that the anode member 20 is fastened by fastening the rod member 22. If the anode member 20 is directly fastened, the anode member 20 cannot be fastened stably for a long time because a size and a shape of the anode member 20 change in a consumed process, and may even disconnect. The rod member 22 is used to indirectly fasten the anode member 20, so that structure stability can be improved, and a relative location of the anode member 20 to the electronic device 10 can be stably fastened. In this embodiment, there are at least two anode members 20 and are at least two rod members 22. In an implementation, a quantity of the rod members 22 is the same as a quantity of the anode members 20. Each anode member 20 is sleeved on one rod member 22, and each rod member 22 includes end parts that protrude from the anode member. The at least two rod members 22 are mutually and fixedly connected by using the end parts, so that the at least two anode members 20 are fastened together. In this embodiment, the at least two anode members 20 are indirectly fastened by fixedly connecting the at least two rod members 22. The manner of fastening the anode members 20 is simple and easy to implement. When the anode member 20 is consumed gradually in the use process, the rod member 22 is not consumed, a fastening structure of the rod member 22 is stable, and a location relationship between the anode members 20 is stable. In this embodiment, the at least two rod members 22 are placed in parallel, and extension directions of the rod members 22 are consistent. Specifically, the at least two rod members 22 may be placed in parallel. In an implementation, the electronic device assembly 100 further includes a fastener 24, and both oppositely disposed end parts of each rod member 22 are fixedly connected to the fastener 24, so as to prevent the rod member 22 from disconnecting in the process of consuming the anode member 20. Specifically, each of the oppositely disposed end parts of the rod member 22 is welded to one fastener 24; in other words, the rod member 22 is fastened between two fasteners 24. In an implementation, the fastener 24 is an I-shaped cast iron piece that has a high strength. When the rod member 22 is a cast iron rod, the fastener 24 is firmly welded to the rod member 22 and is not easily corroded. In an implementation, a plurality of rod members 22 are arranged in a same direction. Specifically, central axes of the plurality of rod members 22 are parallel, sizes of the rod members 22 are the same, and one end of each rod member 22 is welded to one fastener 24, the other end of each rod member 22 is welded to another fastener 24, and the fastening structure of the rod member 22 is stable. Because the plurality of rod members 22 are placed in parallel, and a plurality of anode members 20 are also placed in parallel. The anode members 20 are placed in order, and this facilitates even consumption of the anode members 20 in the use process and helps replacement and maintenance of the anode members 20.

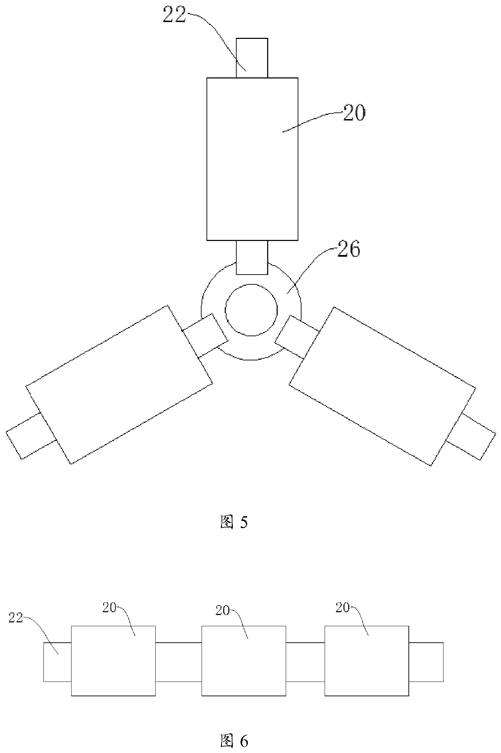

Referring to FIG. 5, FIG. 5 is a schematic diagram of another installation manner of the anode member 20. In this embodiment, the at least two rod members 22 are distributed radially by using a same fastening point as a center, one end part of each rod member 22 is fastened at a location of the fastening point, and the other end part of each rod member 22 is a free end. In an implementation, a fastening ring 26 is disposed at the location of the fastening point, the at least two rod members 22 are distributed radially by using the fastening ring 26 as a center, and one end part of each rod member 22 is fastened on the fastening ring 26. A free end of each rod member 22 may not be fastened by using any structure, or the free end may be fastened by using a structure similar to the fastening ring, so as to further strengthen structure stability between the at least two rod members 22. In an implementation, distances between the rod members 22 are the same, or included angles between the rod members 22 are the same, so that the anode members 20 are evenly distributed. This fastening manner is simple and easy to implement and provides easy replacement and maintenance, and the anode member 20 is not easy to disconnect.

Referring to FIG. 6, showing an example useful for understanding the technical solution and not covered by the claims FIG. 6 is a schematic diagram of another installation manner of the anode member 20. A plurality of anode members 20 are sleeved and fastened on a same rod member 22. Specifically, a gap is disposed between the anode members 20, so that the anode members 20 are disposed separately from each other, and each anode member 20 works independently and is easy to replace and maintain. In addition, the anode member 20 is not easy to disconnect.

In an implementation, the second metal from which the anode member 20 is made is an environment-friendly material, such as an aluminum base material or zinc. The anode member 20 is consumed and dissolved in the accumulated water 54 or precipitated in the accumulated water 54 without pollution to the accumulated water 54. In an implementation, after the anode member 20 is consumed, an increase amplitude of a pH value of the accumulated water 54 is relatively small, so as to avoid secondary damage to a coating of the housing of the electronic device 10. In an implementation, the first metal is an aluminum alloy, and a protection potential of the second metal relative to the first metal is lower than -1.05 V, so as to avoid overprotection for the electronic device 10 by the anode member 20, and avoid cathodic disbondment on the coating of the housing of the electronic device 10.

In an implementation, in the remote direct current supply scenario, the second metal may be pure zinc, so as to protect the electronic device 10 from galvanic corrosion. Pure zinc has the following features: 1. Relatively small difference between open- and closed-circuit potentials, and relatively small resistance of oxidation-reduction reaction; 2. Fewer detrimental impurities (iron content) and large effective energy yield; 3. High current efficiency, high solubility, relatively high output current, and automatic current adjustment. When damage to the coating of the housing of the electronic device 10 increases gradually, the pure-zinc anode member 20 may make an adjustment by itself and output a larger protection current, so as to ensure that the electronic device 10 is protected effectively for a long time. In this embodiment, when the accumulated water 54 is fresh water, mass of the second metal is not less than 1.97 kg, so that as consumption of the anode member 20 increases over time, the anode member 20 can be used for at least 10 years without maintenance.

Specifically, a mean occurrence current of the anode member 20 when the anode member 20 protects a bare metal is obtained based on weight loss of the anode member 20 in a water accumulation environment of the manhole in a design baseline experiment and in combination with an actual capacitance of the pure-zinc anode member 20 that is measured in an electrochemical efficiency test.

According to DNV-RP-B401 and NACE RP0176 standards, a breakdown rate of the coating is selected as 0.5. An anode size can be obtained by using parameters listed in the following table and calculation formulas.

(1) Anode design

Protection current density of the bare metal $i_{bare}$: 7.71 mA/m$^2$
Mean protection current density $i_{mean}$: 7.71*0.5=3.855 mA/m$^2$
Final protection current density $i_{final}$: 7.71 mA/m$^2$
Protection area S: 1.98 m$^2$
Design protection years: 10a
Resistivity $\rho$: 1150 $\Omega$•cm
Actual capacitance Q: 625 A•h/kg
Utilization factor $\mu$: 0.8
Required minimum anode mass:

$$M = \frac{8760 \bullet t \bullet I}{Q \bullet \mu}$$

Data is substituted to obtain:

$$M=8760*10*3.855*1.98/1000/625/0.8=1.34 \text{ kg}$$

To facilitate design and processing, a net anode length is set to 500 mm uniformly.

A radius of the rod member is selected as 20 mm, and an anode radius is selected as $r_{initial}$=23 mm.

Then, anode mass is:

$$M_{anode}=1.45 \text{ kg}$$

$$M_{anode} > M$$

Therefore, a weight of the anode meets the design requirement.

(2) Calculation of anode occurrence current

The anode occurrence current is:

$$I_f = \Delta E / R$$

where, $\Delta E$ is a drive voltage and is 0.2 V.

Water-contact resistance of the anode member 20 is calculated according to the following formula:

$$R = \frac{\rho}{2\pi L}\left(\ln\frac{4L}{r} - 1\right)$$

In the formula, $\rho$: solution resistivity, $\Omega \cdot cm$; $\rho = 1150\ \Omega \cdot cm$;

L: sacrificial anode length, cm;
r: anode radius, cm.

Related data is substituted into the formula to obtain:

$I_f = 0.0157$
Mean protection current $I_{mean} = i_{mean}{}^*S = 3.855*1.98 = 0.0076$ A $I_f > I_{mean}$

Sacrificial anode occurrence current meets the requirement.

(3) Calculation of final anode occurrence current

Final anode radius:

$$r_{final} = r_{initial} - (r_{initial} - r_{iron\ core})\mu$$

Then, $r_{final} = 2.06$ cm
The final anode occurrence current is:

$$I_{f\ final} = \Delta E / R$$

$$R = \frac{\rho}{2\pi L}\left(\ln\frac{4L}{r} - 1\right)$$

Related data is substituted into the formula to calculate final anode water-contact resistance:

$R_{final} = 12.692$
Anode occurrence current: $I_{f\ final} = 0.0153$ A

A required final protection current is: $I_{final} = i_{final}{}^*S = 7.71*1.98/1000 = 0.0152$ A

$$I_{f\ final} > I_{final}$$

Therefore, a final radius meets the requirement.

According to the above calculation process, the weight of the pure-zinc anode member 20 is designed as 1.97 Kg.

In this embodiment, the anode member 20 performs anti-corrosion protection on the whole of the electronic device 10, and a metal potential of the anode member 20 is lower than a metal potential of each component of the electronic device 10. The anode member 20 isolates galvanic corrosion between the electronic device 10 and the grounding device 30, and also isolates galvanic corrosion between dissimilar metals inside the product, so as to further protect the electronic device 10.

In this embodiment, the electronic device 10 is electrically connected to the grounding device 30, and a comparison test is performed between a case in which the electronic device 10 is electrically connected to the anode member 20 and a case in which the electronic device 10 is not electrically connected to the anode member 20. Specifically, FIG. 2 is a schematic diagram in which the electronic device 10 is electrically connected to the anode member 20 and the grounding device 30. FIG. 3 is a schematic diagram in which the electronic device 10 is electrically connected to the grounding device 30.

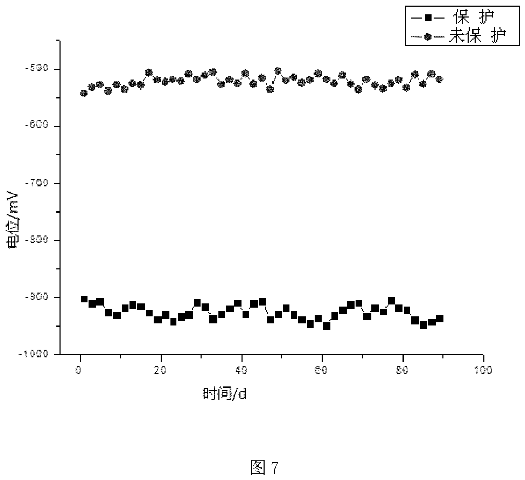

The closed-circuit potential is the most direct and effective data for determining whether a protected body is protected effectively. It may be seen from FIG. 7 that potentials of the unprotected electronic device 10 are within -500 mv to -550 mv, and the electronic device 10 is in a corroded state. The electronic device 10 that is protected by the anode member 20 has potentials decreased by more than 400 mV, indicating that the electronic device 10 is being effectively protected.

In an implementation, in the alternating current cable-supply scenario, the second metal may be an aluminum base material, namely, an aluminum alloy, to protect the electronic device 10 from galvanic corrosion and electrolytic corrosion. The aluminum base material has characteristics of a large energy yield, a small density, a light weight, excellent electrochemical performance, and automatic current and potential adjustment. The aluminum base material is prone to passivation, and a layer of oxide film is easily formed on a surface of the anode member 20, causing deteriorating of solubility of the anode member 20. However, in the alternating current cable-supply scenario, when an alternating current passes through the surface of the anode member 20, dissolution of the oxide film on the surface of the anode member 20 may be accelerated, so that the anode member 20 can continuously protect the electronic device 10. The aluminum base material is used as the base material of the anode member 20, so as to reduce the quantity of the anode member 20 and reduce the size of the anode member 20. In addition, the anode member 20 has a large energy yield and low costs. In this embodiment, when the accumulated water 54 is fresh water, the mass of the second metal is not less than 1.3 kg, so that an occurrence current of the anode member 20 is not less than an alternating current corrosion current. In addition, when the consumption of the anode member 20 increases over time, the anode member 20 can be used for at least 10 years without maintenance.

Specifically, with reference to the calculation and experiment results of the pure-zinc material, a sacrificial anode design under electrolytic corrosion needs to meet the following conditions:

1. A weight of the sacrificial anode meets a design lifetime requirement.
2. Sacrificial anode occurrence current ≥ Alternating current corrosion current.

According to an aluminum anode capacitance Q=2574 Ah/kg, the alternating current corrosion current i is set to 60 mA. The anode current $i_{anode}$=30 mA. According to an anode utilization rate 0.8 in DNV-RP-B401, if a designed lifetime is 10 years, mass M of the anode is at least 1.3 kg.

The sacrificial anode water-contact resistance is calculated according to the following formula:

$$R = \frac{\rho}{2\pi L}\left(\ln\frac{4L}{r} - 1\right)$$

In the formula, $\rho$: solution resistivity, $\Omega \cdot$cm; $\rho$=40 $\Omega \cdot$cm (3.5% NaCl);

L: sacrificial anode length, cm;
r: anode radius, cm.

Water-contact resistance 0.7 $\Omega$ of a prototype is obtained, and the drive voltage is selected as 0.4 V according to a previous test measurement value. Then, theoretically, an occurrence current of the prototype is 570 mA, which is greater than 60 mA and meets the design requirement.

In this embodiment, the anode member 20 has the characteristic of automatic current and potential adjustment, and may perform corresponding current adjustment when the housing of the device has a periodic current in the cable-supply scenario. The anode member 20 isolates galvanic corrosion and electrolytic corrosion between the electronic device 10 and the grounding device 30, thereby protecting the electronic device 10.

In this embodiment, the electronic device 10 is electrically connected to the grounding device 30, and a comparison test is performed between a case in which the electronic device 10 is electrically connected to the anode member 20 and a case in which the electronic device 10 is not electrically connected to the anode member 20. During immersion, in addition to solution electrical conductivity, a pH value, and the like, a module potential, a module occurrence current, an anode occurrence current, and the like are monitored on a module protected by the anode (electronic device 10 electrically connected to the anode member 20). On the unprotected module (electronic device 10 not electrically connected to the anode member 20), a corrosion current is controlled to be constant 60 mA, and a change status of a module potential is detected. In the following data, 1#, 2#, and 3# modules are not protected, and 4#, 5#, and 6# modules are protected by the anode.

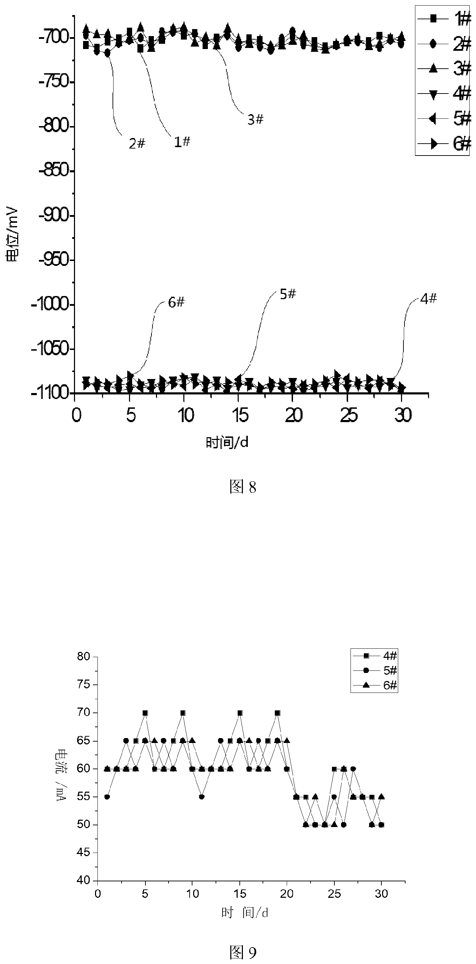

FIG. 8 is a potential change diagram of each module. With the corrosion current 60 mA, potentials of the 1#, 2#, and 3# modules are not obviously increased compared with natural potentials measured in the previous experiment. The potential of each module is basically fluctuating around 700 mV, and the potential fluctuation is stable. Under a same condition, the 4#, 5#, and 6# modules are connected to the sacrificial anode (anode member 20), and their potentials are obviously decreased by about 400 mV compared with the natural potentials, indicating that the modules (electronic device 10) are under cathodic protection. During immersion, the potential fluctuation is relatively light, and a protection state is stable.

FIG. 9 shows a change status of an output current of an anode (anode member 20) of a protected module. When the corrosion current is 60 mA, an anode occurrence current is also close to 60 mA. However, the sacrificial anode occurrence current fluctuates slightly from 50 mA to 70 mA during immersion. Overall output currents are stable, and a protection effect of the anode is stable and effective.

What is disclosed above is merely examples of embodiments and certainly is not intended to limit the protection scope of the present invention, which is defined by the claims.

**Claims**

1. An arrangement comprising a manhole (50) and an electronic device assembly (100), fastened in the manhole (50), wherein the electronic device assembly (100) comprises:

   an electronic device (10) that is an electronic communications device, namely an access device, wherein a base material of a housing of the electronic device (10) is a first metal;
   a grounding device (30), electrically connected to the housing; and
   at least two anode members (20), electrically connected to the housing, wherein a base material of the anode members (20) is a second metal, and a metal potential of the second metal is less than a metal potential of the first metal,
   the grounding device (30) and the anode member (20) are electrically connected to a ground point (102) of the electronic device (10) by using a split cable (40) or a conversion bracket,
   wherein there are at least two rod members (22), each of the anode members (20) is sleeved on one of the rod members (22), each of the rod members (22) comprises end parts protruding from the respective anode member (20), and the at least two rod members (22) are mutually fastened by using the end parts, the at least two rod members (22) are placed in parallel, and extension directions of the rod members are consistent, and two oppositely disposed respective end parts of each of the rod members (22) are fixedly connected to a fastener (22), or
   wherein the at least two rod members (22) are distributed radially by using a same fastening point as a center, one end part of each of the rod members (22) is fastened at a location of the fastening point, and the other end part of each of the rod members (22) is a free end.

2. The arrangement according to claim 1, wherein a material of the rod members (22) is cast iron.

3. The arrangement according to claim 1, wherein a base material of the grounding device (30) is a third metal, and the metal potential of the first metal is less than a metal potential of the third metal.

4. The arrangement according to claim 1, wherein the first metal is an aluminum alloy, and a protection potential of the second metal is lower than -1.05 V.

5. The arrangement according to any one of claims 1 to 4, wherein the second metal is zinc, and mass of the second metal is not less than 1.97 kg.

**6.** The arrangement according to any one of claims 1 to 4, wherein the second metal is an aluminum alloy, and mass of the second metal is not less than 1.3 kg.

**7.** The arrangement according to any one of claims 1 to 4, wherein an alarm apparatus (101) is further disposed, and when a mass of the anode member (20) is less than a preset value, the alarm apparatus (101) is configured to send an alarm signal.

**Patentansprüche**

**1.** Anordnung, die einen Schacht (50) und eine elektronische Vorrichtungsbaugruppe (100) umfasst, die in dem Schacht (50) befestigt ist, wobei die elektronische Vorrichtungsbaugruppe (100) umfasst:

eine elektronische Vorrichtung (10), die eine elektronische Kommunikationsvorrichtung insbesondere eine Zugangsvorrichtung ist, wobei ein Basismaterial eines Gehäuses der elektronischen Vorrichtung (10) ein erstes Metall ist;
eine Erdungsvorrichtung (30), die mit dem Gehäuse elektrisch verbunden ist; und
mindestens zwei Anodenelemente (20), die mit dem Gehäuse elektrisch verbunden sind, wobei ein Basismaterial der Anodenelemente (20) ein zweites Metall ist, und wobei ein Metallpotential des zweiten Metalls geringer als ein Metallpotential des ersten Metalls ist, wobei die Erdungsvorrichtung (30) und das Anodenelement (20) mit einem Erdungspunkt (102) der elektronischen Vorrichtung elektrisch verbunden sind, indem ein Verzweigerkabel (40) oder eine Wandlungshalterung verwendet wird,
wobei mindestens zwei Stabelemente (22) vorhanden sind, wobei jedes der Anodenelemente (20) eines der Stabelemente (22) umhüllt, wobei jedes der Stabelemente (22) Endabschnitte umfasst, die aus dem jeweiligen Anodenelement (20) herausragen, und wobei die mindestens zwei Stabelemente (22) gegenseitig aneinander befestigt sind, indem die Endabschnitte verwendet werden, wobei die mindestens zwei Stabelemente (22) parallel zueinander angebracht sind und wobei die Ausdehnungsrichtungen der Stabelemente konsistent sind, und wobei zwei entgegengesetzt zueinander liegende Endabschnitte von jedem der Stabelemente (22) mit einem Befestigungselement (22) fest verbunden sind, oder
wobei die mindestens zwei Stabelemente (22) radial verteilt sind, indem ein gleicher Befestigungspunkt als ein Mittelpunkt verwendet wird, wobei ein Endabschnitt von jedem der Stabelemente (22) an einem Ort des Befestigungspunkts befestigt ist, und wobei der andere Endabschnitt von jedem der Stabelemente (22) ein freies Ende ist.

**2.** Anordnung nach Anspruch 1, wobei ein Material der Stabelemente (22) Gusseisen ist.

**3.** Anordnung nach Anspruch 1, wobei ein Basismaterial der Erdungsvorrichtung (30) ein drittes Metall ist, und wobei das Metallpotential des ersten Metalls geringer als ein Metallpotential des dritten Metalls ist.

**4.** Anordnung nach Anspruch 1, wobei das erste Metall eine Aluminiumlegierung ist und ein Schutzpotential des zweiten Metalls geringer als -1,05 V ist.

**5.** Anordnung nach einem der Ansprüche 1 bis 4, wobei das zweite Metall Zink ist und wobei eine Masse des zweiten Metalls nicht geringer als 1,97 kg ist.

**6.** Anordnung nach einem der Ansprüche 1 bis 4, wobei das zweite Metall eine Aluminiumlegierung ist und wobei eine Masse des zweiten Metalls nicht geringer als 1,3 kg ist.

**7.** Anordnung nach einem der Ansprüche 1 bis 4, wobei außerdem eine Alarmeinrichtung (101) eingerichtet ist und wobei, wenn eine Masse des Anodenelements (20) geringer als ein voreingestellter Wert ist, die Alarmeinrichtung (101) konfiguriert ist, um ein Alarmsignal zu senden.

**Revendications**

**1.** Agencement comprenant un regard (50) et un ensemble dispositif électronique (100), fixé dans le regard (50), dans lequel l'ensemble dispositif électronique (100) comprend :

un dispositif électronique (10) qui est un dispositif de communication électronique, à savoir un dispositif d'accès, dans lequel un matériau de base d'un boîtier du dispositif électronique (10) est un premier métal ;

un dispositif de mise à la terre (30), connecté électriquement au boîtier ; et

au moins deux éléments d'anode (20), connectés électriquement au boîtier, dans lequel un matériau de base des éléments d'anode (20) est un deuxième métal, et un potentiel du métal du deuxième métal est inférieur à un potentiel du métal du premier métal,

le dispositif de mise à la terre (30) et l'élément d'anode (20) sont connectés électriquement à un point de terre (102) du dispositif électronique (10) au moyen d'un câble divisé (40) ou d'une console de conversion,

dans lequel se trouvent au moins deux éléments tiges (22), chacun des éléments d'anode (20) est emmanché sur l'un des éléments tiges (22), chacun des éléments tiges (22) comprend des parties d'extrémité faisant saillie depuis l'élément d'anode respectif (20), et les au moins deux éléments tiges (22) sont fixés mutuellement en utilisant les parties d'extrémité, les au moins deux éléments tiges (22) sont placés en parallèle, et des directions d'extension des éléments tiges sont convergentes, et deux parties d'extrémité respectives disposées de façon opposée de chacun des éléments tiges (22) sont fixées à demeure à un dispositif de fixation (22), ou

dans lequel les au moins deux éléments tiges (22) sont répartis radialement en utilisant un même point de fixation en tant que centre, une partie d'extrémité de chacun des éléments tiges (22) est fixée à un emplacement du point de fixation, et l'autre partie d'extrémité de chacun des éléments tiges (22) est une extrémité libre.

2. Agencement selon la revendication 1, dans lequel un matériau des éléments tiges (22) est la fonte.

3. Agencement selon la revendication 1, dans lequel un matériau de base du dispositif de mise à la terre (30) est un troisième métal, et le potentiel du métal du premier métal est inférieur à un potentiel du métal du troisième métal.

4. Agencement selon la revendication 1, dans lequel le premier métal est un alliage d'aluminium, et un potentiel de protection du deuxième métal est inférieur à -1,05 V.

5. Agencement selon l'une quelconque des revendications 1 à 4, dans lequel le deuxième métal est le zinc, et la masse du deuxième métal n'est pas inférieure à 1,97 kg.

6. Agencement selon l'une quelconque des revendications 1 à 4, dans lequel le deuxième métal est un alliage d'aluminium, et la masse du deuxième métal n'est pas inférieure à 1,3 kg.

7. Agencement selon l'une quelconque des revendications 1 à 4, dans lequel un appareil d'alarme (101) est en outre disposé, et lorsqu'une masse de l'élément d'anode (20) est inférieure à une valeur prédéfinie, l'appareil d'alarme (101) est configuré pour envoyer un signal d'alarme.

图 1

图 2

图 3

图 4

图 5

图 6

图 7

图 8

图 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S58031087 A
- JP S5670976 U
- GB 1441540 A
- US 2609340 A
- US 20140216945 A1